(19) **Europäisches Patentamt**
**European Patent Office**
**Office européen des brevets**

(11) **EP 2 235 707 B1**

(12) **EUROPEAN PATENT SPECIFICATION**

(45) Date of publication and mention
of the grant of the patent:
**14.09.2016 Bulletin 2016/37**

(51) Int Cl.:
*H04W 52/02* *(2009.01)*    *H04W 52/34* *(2009.01)*

(21) Application number: **09829783.1**

(22) Date of filing: **25.11.2009**

(86) International application number:
**PCT/US2009/065893**

(87) International publication number:
**WO 2010/062942 (03.06.2010 Gazette 2010/22)**

(54) **DEVICE AND METHOD FOR ADAPTIVE POWER CONSERVATION BASED ON TRAFFIC PROFILES**

VORRCIHTUNG UND VERFAHREN FÜR ADAPTIVES ENERGIESPAREN AUF BASIS VON VERKEHRSPROFILEN

DISPOSITIF ET PROCÉDÉ POUR UNE CONSERVATION DE PUISSANCE ADAPTATIVE BASÉE SUR DES PROFILS DE TRAFIC

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **26.11.2008 US 118137 P**

(43) Date of publication of application:
**06.10.2010 Bulletin 2010/40**

(73) Proprietor: **Murata Manufacturing Co., Ltd.**
**Kyoto-fu, 617-8555 (JP)**

(72) Inventors:
• **LIN, Xinsi**
**Lewisville, TX 75056 (US)**
• **KU, Yuan, Min**
**Plano, TX 75025 (US)**

• **SORADA, Koichi**
**Plano, TX 75024 (US)**

(74) Representative: **Zimmermann, Tankred Klaus et al**
**Schoppe, Zimmermann, Stöckeler**
**Zinkler, Schenk & Partner mbB**
**Patentanwälte**
**Radlkoferstrasse 2**
**81373 München (DE)**

(56) References cited:
**EP-A2- 0 426 452      EP-A2- 1 111 895**
**EP-A2- 1 613 107      WO-A1-2005/002137**
**US-A1- 2004 127 214   US-A1- 2006 252 449**
**US-A1- 2007 036 096   US-A1- 2007 201 413**
**US-A1- 2007 259 673   US-A1- 2008 002 692**
**US-A1- 2008 261 663   US-B1- 6 721 355**

## Description

## BACKGROUND

Usage of communications services and products have grown nearly exponentially in recent years. The growth is fostered by improving hardware, software, standards, and protocols. The utilization of wireless local area networks (WLANs) have similarly increased. Many businesses, homes, organizations, and other locations now utilize WLANs to foster improved communications for employees and occupants. For example, WiFi networks are examples of popular WLANs.

While WLANs are extremely useful, wireless devices accessing and communicating through the WLANS may consume power faster than other forms of wireless communications. In some cases, a wireless device may communicate with an wireless access point utilizing a normal mode and a sleep mode to conserve power. In the normal mode, the power consumption of the wireless device is high, quickly draining the battery. The sleep mode may cause unacceptable delays in data throughput during the time periods in which the wireless device sleeps. As a result, optimizing conservation of power while simultaneously maintaining high throughput may be very difficult.

WO 2005/002137 A1 describes a method for controlling power consumption in a short-range wireless terminal. The data traffic of the terminal is monitored and at least one parameter describing the data traffic is defined. Based on said at least one parameter and the beacon interval information received in beacon frames, the power state of the terminal is dynamically controlled so that the terminal is maintained in one of at least two power states including an active state and a power save state.

EP 1 613 107 A2 describes that a sleep cycle of a mobile station may be optimally varied depending upon one or more conditions relating to the mobile station's operation. Based on one or more of those conditions, a variable wake up parameter is determined and used to establish times when the mobile station automatically leaves a lower power mode and enters a higher power mode to listen for a page. The mobile station's variable wake up parameter is provided to a radio access network and to one or more core networks to permit coordination of communications and services with the mobile station.

US 2008/261663 A1 describes methods and arrangements for wireless communications are described which allow to adaptively change a snoozing interval of a station. A timeout (TO) period for a station is determined, network traffic of the station is examined after a period of network traffic inactivity not less than the TO period, and a snoozing interval is determined. The length of the snoozing interval is based upon the examination of the network traffic.

US 2007/259673 A1 describes that different types of traffic requiring different inactivity timer settings are assigned to different bearers or to different QoS classes. Different inactivity timer settings are established for different traffic types. Individual bearers or individual QoS classes are linked to a corresponding inactivity timer profile.

## SUMMARY

It is an object of the invention to provide an improved communication in a wireless device.

This object is achieved by a method of claim 1, and by a device of claim 9.

## BRIEF DESCRIPTION OF THE DRAWINGS

Illustrative embodiments of the present invention are described in detail below with reference to the attached drawing figures, which are incorporated by reference herein and wherein:

> FIG. 1 is a pictorial representation of a communications system in accordance with an illustrative embodiment of the present invention;
> FIG. 2 is a block diagram of a wireless device in accordance with an illustrative embodiment of the present invention;
> FIG. 3 is a data stream utilizing a power save mode in accordance with the prior art;
> FIG. 4 is a heavy data stream utilizing a power save mode in accordance with the prior art;
> FIG. 5 is a voice stream utilizing a periodic power save mode in accordance with an illustrative embodiment of the present invention;
> FIG. 6 is a heavy data stream utilizing a full power mode in accordance with an illustrative embodiment of the present invention;
> FIG. 7 is a light data stream utilizing a power save mode in accordance with an illustrative embodiment of the present invention; and
> FIG. 8 is a flow chart of a process for utilizing a traffic profile to conserve power in accordance with an illustrative embodiment of the present invention.

## DETAILED DESCRIPTION OF THE DRAWINGS

Illustrative embodiments of the present invention provide a system and method for utilizing traffic profiles to conserve power and maximize data throughput. A WLAN or wireless device may communicate varying levels of traffic during usage. The levels of traffic may vary from no or minimal traffic to very large file transfers. Digital voice telephony, such as voice traffic, is somewhere in the middle, but is especially important because increasing latency and decreasing throughput may significantly affect call and voice quality. In one embodiment, the different levels of traffic as determined by the WLAN device may be associated with one or more states, modes, or profiles that may be linked with specific communications applications. For example, large file transfers may require high throughput to be communicated efficiently, whereas voice stream communications may need low jitter and low latency to ensure call quality.

The illustrative embodiments may utilize one or more determinations to enter or select a traffic profile. The traffic profile may be selected utilizing packet communication information, applications in use by the WLAN device, or other similar information. In one embodiment, packet communication information is the frequency at which packets are communicated to and/or from a wireless device. However, the packet communication information may include an average time period between packet communication to or from a wireless device, packet size, a number of packets communicated within a window of time, the average number of packets received during a wake up period or sleep interval, or any other suitable information regarding the timing or other characteristics of packets communicated to or from a wireless device.

In one embodiment, the packet communication information may include an average packet period as described herein. The traffic profile may be associated with communications actions or power states or modes that may improve overall WLAN performance and particularly, power consumption. The illustrative embodiments may allow a WLAN device to maintain higher throughput in order to efficiently communicate data utilizing a number of power modes. The illustrative embodiments may also allow a WLAN device to reduce a time interval in which the WLAN device is in a higher power consumption state without interaction or coordination with a wireless access point. The illustrative embodiments may be implemented utilizing digital logic, state machines, algorithms, software, circuits, and any combination thereof.

Various illustrative embodiments may have significant advantages over existing systems, devices, and processes. In one embodiment, a wireless device may be operable to select one of three traffic profiles based on packet communication information as measured, calculated, averaged, or otherwise determined for specified time periods, intervals, applications, packet types, windows, or thresholds. For example, the number of packets sent (and/or received) during a time interval may also be referred to as a communications average. The average number of packets communicated during a period of time may be utilized to determine the applicable traffic profile. In addition to a sleep mode and a full power mode, the wireless device may utilize a periodic data mode which allows the wake up period typically utilized by wireless devices to be much less than a default wake up period, such as 100 milliseconds (ms). As a result, the wireless device may "wake up" to transmit at reduced periods regardless of whether the wireless access point is expecting packets from the wireless device and to receive at reduced periods, and regardless of whether data packets are buffered at the wireless access point. In another embodiment, the wireless device may transmit or receive data packets to the wireless access point immediately once the packets are sampled or received by the wireless device or the wireless access point before returning to a sleep state. Therefore, the wireless device may communicate with the wireless access point without much delay in a periodic data mode.

The wireless device may implement the systems and methods herein described without changing the communications standards utilized between the wireless device and wireless access point or reconfiguring the applicable wireless access point. Various illustrative embodiments may be further configured to utilize an existing power save mode, a specialized or periodic power save mode for voice communications, and a full power mode in response to determining a light traffic, periodic traffic, and heavy traffic profile, respectively. The power modes may each implement a specific wake up period.

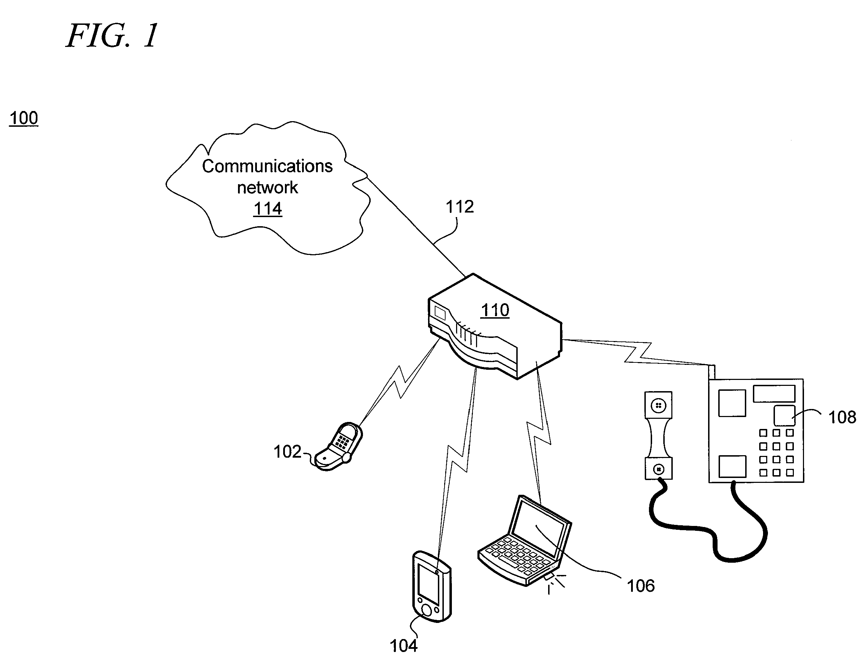

FIG. 1 is a pictorial representation of a communications system in accordance with an illustrative embodiment of the present invention. The communications system 100 may include any number of hardware, software, devices, systems, equipment, components, and other elements. In one embodiment, the communications system 100 may include wireless devices 102, 104, 106, and 108, a wireless router 110, a data connection 112, and a communications network 114.

The wireless devices 102, 104, 106, and 108 are illustrative embodiments of WLAN devices that may utilize a number of traffic profiles to implement specific power conservation modes, actions, or steps. In particular, the wireless devices 102, 104, 106, and 108 may be end-user wireless devices. The end-user wireless device is a wireless device utilized by an individual whom is the ultimate recipient of communications. The end-user wireless device may be mobile, handheld, and utilized by the user to interface with one or more communications networks. In one embodiment, the wireless devices 102, 104, 106, and 108 may include cell phones, personal digital assistants (PDAs), wireless telephones, laptops, terminals, or other wireless computing and communications devices.

The wireless devices 102, 104, 106, and 108 may communicate with one or more wireless access points. A wireless access point is an interface for sending and receiving communications from the wireless devices 102, 104, 106, and 108 through the communications network 114. The wireless router 110 is one embodiment of a wireless access point. The wireless access point may also be a WiMAX antenna and communications system, femto or pico cell, WiFi router, or other wireless communications system. The wireless router 110 may be utilized to communicate with any number of personal, business, organizational, or other wireless devices utilizing any number of communications protocols and standards. In one embodiment, the wireless router 110 may communicate with the communications network 114 through the data connection 112. The illustrative embodiments may be performed by one or more of the wireless devices 102, 104, 106, and 108 without permanently or temporarily reconfiguring or changing the communications standards, settings, and protocols utilized by the wireless router 110.

The data connection 112 may be a fiber optic cable, DSL, T1, satellite, WiMAX, power line, or any other communications lines, links, or connections that are suitable for communicating data, voice, or packet communications. The communications network 114 is a system and environment for routing communications to and from the wireless router 110. The communications network 114 may communicate with any number of networks including the Internet, public and private access networks, virtual networks, and other networks, types, and configurations. As previously described, the wireless devices 102, 104, 106, and 108 may utilize one or more determinations to select a traffic profile and a corresponding power save mode for enhancing communications and conserving power.

The wireless devices 102, 104, 106, and 108 may utilize a sleep state or mode as a power save mode. The sleep mode is useful in the wireless devices 102, 104, 106, and 108 and their utilized applications to reduce battery power consumption. In one embodiment, sleep mode operation is characterized by monitoring a communications channel during periodic monitoring intervals (wake up intervals) separated by corresponding sleep intervals. In one embodiment, the communications channel is a paging channel that is utilized to implement a sleep mode. In the sleep mode, the wireless devices 102, 104, 106, and 108 may send a packet to the wireless router 110 indicating that each device is going to enter a sleep mode for a sleep interval during which data communications are temporarily suspended.

In one embodiment, a beacon signal or paging signal, denoting the sleep interval, may be communicated to one or more of the wireless devices 102, 104, 106, and 108 from the wireless router 110 at a specified frequency or predetermined period to initiate communications after a sleep interval. The sleep interval may remain constant regardless of the communications that occur between or during the sleep intervals. The wireless devices 102, 104, 106, and 108 may similarly awaken from the sleep state to determine whether the beacon signal is received and whether to perform communications or immediately return to the sleep state. If the beacon signal indicates there are no packets to receive, the wireless devices 102, 104, 106, and 108 may immediately re-enter sleep state. If the beacon signal is received or if the wireless devices 102, 104, 106, and 108 and/or wireless router 110 have packets to communicate, the wireless devices enter an active state and perform the communications before re-entering sleep state until the next beacon signal.

The traffic profile selection may be made based on the average number of packets communicated during a period of time, types of usage of the wireless devices 102, 104, 106, 108, packet types, or other information regarding packet traffic and type. As a result, the wireless devices may more efficiently transition out of a sleep state to perform communications based on the selected profile, thus increasing packet throughput while conserving battery power.

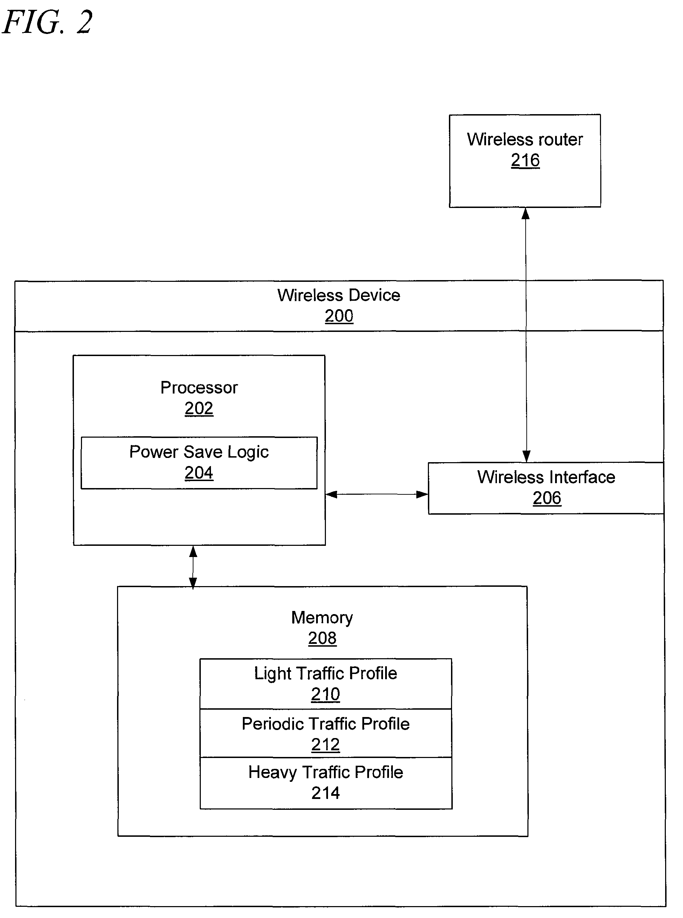

FIG. 2 is a block diagram of a wireless device in accordance with an illustrative embodiment of the present invention. The wireless device 200 is a particular implementation of one or more of the wireless devices 102, 104, 106, and 108 of FIG. 1. In another embodiment, the wireless device 200 may represent a data interface within a wireless communications device that enables wireless communications to any number of other application-specific integrated circuit (ASICs), devices, chips, routers, switches, interfaces, or systems. The wireless device 200 may similarly include any number of devices, cards, circuits, buffers, programmable memory or logic, regulators, drivers, clocks, timers, boards, busses, and other communications and computing components, not all of which are specifically described herein, for purposes of simplicity.

In one embodiment, the wireless device 200 may include a processor 202, power save logic 204, a wireless interface 206, a memory 208, a light traffic profile 210, a periodic traffic profile 212, and a heavy traffic profile 214. As previously described, the wireless device 200 may communicate with a wireless router 216.

In another embodiment, the various elements of the wireless device 200 may be implemented as part of an ASIC or chipset. The processor 202 is circuitry or logic enabled to control execution of a set of instructions. The processor 202 may be a microprocessor, digital signal processor, central processing unit, or other device suitable for controlling an electronic device, including one or more hardware and software elements, executing software, instructions, programs and applications, converting and processing signals and information, and performing other related tasks. The processor 202 may be a single chip or integrated with other computing or communications elements.

The memory 208 is a hardware element, device, or recording media configured to store data for subsequent retrieval or access at a later time. The memory 208 may include both static and dynamic memory. The memory 208 may include a hard disk, random access memory, cache, removable media drive, mass storage, or configuration suitable as storage for data, instructions, and information. In one embodiment, the memory 208 and the processor 202 may be integrated. The memory 208 may use any type of volatile or non-volatile storage techniques and mediums.

The wireless device 200 may take specific actions and implement the features, processes, steps, and methods, as herein described, in any number of ways. In one embodiment, the power save logic 204 is digital logic for implementing a selected power mode based on a determination of the appropriate profile stored in the memory 208. In another embodiment, the power save logic 204, may store and implement an action or sleep interval associated with the light traffic profiles 210, the periodic traffic profiles 212, and the heavy traffic profiles 214. For example, in response to selecting the periodic traffic profile 212, the power save logic 204 may send a command to all or portions of the components and elements of the wireless device 200, such as a transceiver encompassed in the wireless interface, to enter a sleep mode (a power save mode) from a periodic sleep mode. Similarly, the transceiver may transition from the periodic sleep mode to a full power mode more frequently based on intensive packet traffic. A command line or signal structure within the wireless device 200 may indicate the transition of the wireless device 200 and corresponding components between power modes.

The power save logic 204 may be digital logic, a state machine, a controller, firmware, a set of instructions, or other logic suitable to implement a power conservation mode or action based on a determination of the appropriate traffic profile associated with average packet periods and communications between the wireless device 200 and the wireless router 216.

The wireless interface 206 is the wireless transmitter and receiver interface for communicating with other wireless devices including the wireless router 216. The wireless interface 206 may also include any number of antennas, memories, filters, amplifiers, buffers, controllers, drivers, applications, and other similar communications elements. The traffic profile stored within the memory 208 may be implemented based on the communications performance, measurements, or characteristics of the wireless device 200.

The traffic profiles may represent states, modes, or settings of the wireless device 200. The traffic profiles may utilize any number of thresholds, parameters, and conditions to implement the actions herein described. In particular, the determination of the appropriate traffic profile may be selected based on the average number of packets communicated during a period of time of the last packets communicated by the wireless interface 206. Packet communication, as described herein, may include inbound and outbound packets received and transmitted by the wireless interface 206. In one embodiment, the average period is the number of packets received during a specified time interval, or number of communications windows. The average period may describe the total number of packets communicated or the average frequency at which packets are transmitted and received at the wireless device 200. The selection of the traffic profile may be made based on the average number of packets communicated during an interval of time.

In one embodiment,

$$\text{the average period} = \sum \text{interval}[i]/n$$

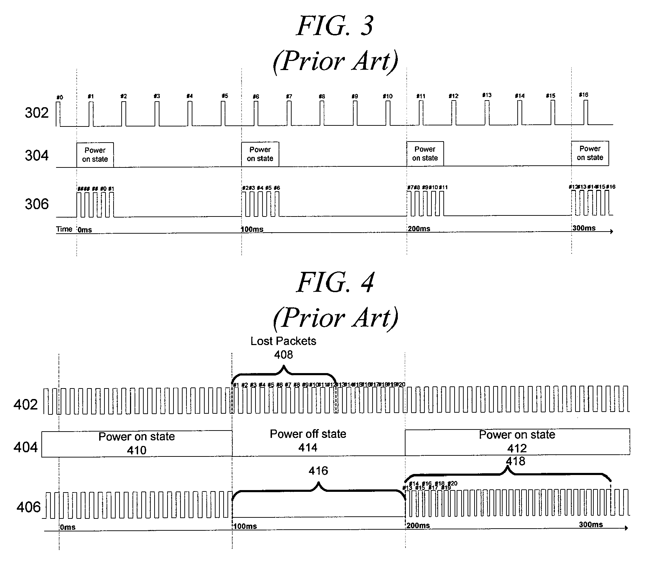

Where i=1,n
n may be determined based on optimization, testing, or experiments. In one embodiment, n represents a number of packets, such as 30 packets. Other specified ranges or values may also be utilized for determining the average period, such as 50 packets received. In one example, the average window to receive 30 packets may be approximately 20 ms in length. As a result, the determination of the traffic profile based on the average traffic per interval may be determined in a total time period, such as a 600 ms time interval. The voice streams and data streams that may be utilized to make the determination are further described in FIGs. 3-6. The number of packets or the time period is a threshold value that may be selected based on the communications characteristics of the wireless device 200 and wireless router 216. In another embodiment, only the number of transmitted packets during the allotted time interval may be utilized to determine the average number of packets communicated during an interval of time. Similarly, the smaller of the average period for transmitting or the average period for receiving packets may be utilized as the average number of packets communicated during an interval of time for selecting a traffic profile.

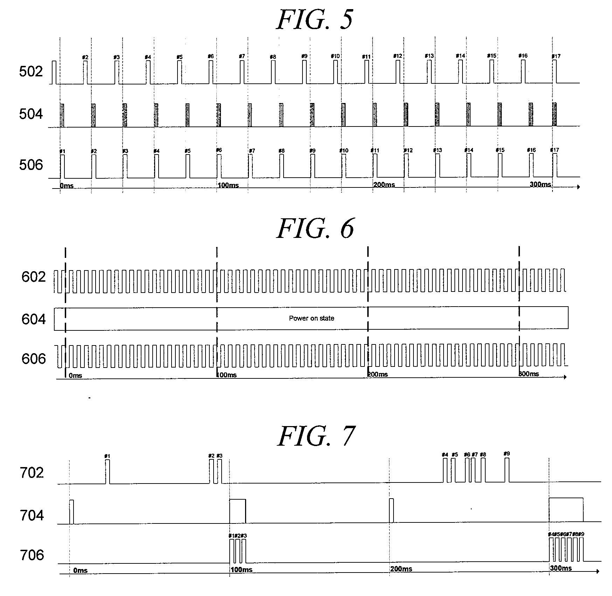

In one embodiment, the light traffic profile 210 is selected when there are sparse packets as further illustrated by FIG. 7. In the light traffic profile 210, an existing power save mode may be utilized. An existing power save mode may indicate that the wireless device 200 is mostly in an idle state, that is a sleep state, such as a wireless device state 704 shows in FIG. 7, so the wireless device 200 may reduce power consumption by using the light traffic profile 210. In particular, the IEEE power save mode for wireless devices may be utilized to wake up the wireless device 200 or the wireless interface 206 at each sleep interval, based on the default setting (i.e., 100 ms). In one embodiment, the light traffic profile 210 is implemented if the average period of the last n packets transmitted or received is more than a first or high threshold, such as 60 ms.

In one embodiment, the periodic traffic profile 212 indicates that there are periodic packets communicated via the wireless device 200 or the wireless interface 206 as further illustrated by FIG. 5. In the periodic traffic profile, a periodic power save mode is utilized whereby the time period of the wireless device is set in response to the transmission period of packets from the wireless access point. One example of periodic packet communications may include voice over Internet protocol (VoIP) communications. In one embodiment, the periodic traffic profile 212 indicates that the average period of the last n packets is less than or equal to the first threshold (i.e., 60 ms), but more than a second or low threshold, such as 10 ms. For example, a typical VoIP communication packet may be sampled or received every 20 ms.

In particular, VoIP communications may require low jitter and latency in order to ensure call quality. It is notable that the IEEE power save mode may be insufficient to satisfy the low jitter and latency requirements. Latency is a measure of the temporal delay. For example, latency may refer to the delay in sending and receiving voice communications packets from either end of a voice communication. Jitter is the variation in the time between packets arriving, caused by network congestion, timing drift, or route changes. For example, the communications packets that are queued or buffered by the wireless device or wireless router 216 between sleep intervals may become congested, decreasing throughput and thus increase latency. The delay in communicating the packets from the wireless device 200 or wireless router 216 may similarly increase the jitter for the wireless device 200 and a telephonic device utilized by a second communicating party.

In one embodiment, the heavy traffic profile 214 may be utilized for large file transfers in which a large volume of packets are being communicated at short intervals as further illustrated by FIG. 6. In the heavy traffic profile 214, a full power mode may be utilized. Large file transfers typically require high throughput. As a result, the standard power save mode which may interrupt the communications every 100 ms may add unnecessary overhead and delay or slow the communication and confirmation of the large file. An example of a large data transfer being interrupted based on interruption by an existing power save mode is further shown in FIG. 4. Conversely, according to the teachings of the present invention, the wireless device 200 may maintain a power on state during the full power mode, so communication interrupts do not occur. In one embodiment, the heavy traffic profile 214 may indicate the average number of packets communicated during an interval of time of the last n packets is less than or equal to the second or low threshold, such as 10 ms.

In another embodiment, the traffic profiles may be selected based on other determinations. For example, the power save logic 204 may select the periodic traffic profile 212 based on activation or utilization of a VoIP application, logic, or circuitry. The heavy traffic profile 214 and light traffic profile 210 may be similarly associated with different applications and functions of the wireless device 200. In another example, an operating system flag or driver may prompt the power save logic 204 to select a traffic profile that corresponds to the type or amount of traffic indicated by the flag or driver. Similarly, information may be retrieved from outgoing packet headers to determine the appropriate traffic profile. For example, communications of voice traffic by the wireless interface 206 may indicate to the power save logic 204 that the period traffic profile 212 be selected, whereas communication of an email, video, or picture may indicate to the power save logic 204 that the heavy traffic profile be selected. Similarly, packets identified to be utilized to establish a link or heart beat between the wireless device 200 and the wireless router 216 may indicate that the light traffic profile 210 be selected. The link or heart beat connection may be utilized to signify that a connection exists and that both devices are functional to transmit and receive packets as needed.

FIG. 3 is a data stream utilizing a power save mode in accordance with the prior art. The data streams of FIG. 3 may include a data stream 302, a wireless device state 304, and a communication stream 306. The data streams illustrate voice communications that may be implemented utilizing a default power save mode and corresponding sleep intervals for voice communications of the data stream 302. The data streams may further illustrate that large fixed sleep intervals or windows do not work well for VoIP using default sleep standards, such as the default IEEE sleep mode or power saving function.

The data stream 302 may represent voice packets that are sampled or processed by the wireless device for transmission to one or more receiving parties and the packets delivered to the wireless device by the wireless access point. For example, the data stream 302 may represent periodic data packets spaced at approximately 20 ms.

In one embodiment, the packets of the voice stream may not be communicated until a sleep interval ends or a beacon signal is received internally or externally by the wireless device indicating that the queued or buffered data stream 302 packets may be communicated. In one example, the sleep interval may last 100 ms at which point the wireless device state 304 transitions out of a sleep mode to communicate the waiting or buffered packets. For example, when the wireless device state 304 transitions, packets 2-6 of the voice stream may be transmitted or received in the communication stream 306.

The device may then enter a power save mode for the remaining portion of the 100 ms before transmitting or receiving packets 7-11 of the data stream 302 in the communication stream 306 at the beginning of the next windows. The packets may be significantly delayed before being communicated in the communication stream 306 increasing latency and potentially causing jitter for both communicating parties resulting in such existing power save mode being unsuitable for voice communications.

FIG. 4 is a heavy data stream utilizing a power save mode in accordance with the prior art. The data streams of FIG. 4 may include a data stream 402, a wireless device state 404, a communication stream 406, lost packets 408, a power on state 410 and 412, a power off state 414, a pause 416, and fast packets 418. The data streams illustrate how large file transfers may be implemented when a standard or default power save mode is activated. For example, in the ongoing example, a 100 ms sleep interval (or window) may be utilized using the standard power setting. The wireless device state 404 transitions between the power on state 410 to the power off state 414 back to the power on state 412.

The communication stream 406 is interrupted when the wireless device state 404 transitions from the power on state 410 or an active state to the power off state 414 or sleep state regardless of the packets within the data stream 402 that are accumulating or buffered for communication. In one example, the lost packets 408 may be removed, deleted, or otherwise lost before they are communicated to or from a wireless access point to the wireless device. For example, the capacity of the buffers may be exceeded causing the packets to be overwritten, discarded, or deleted. As a result, the lost packets 408 may need to be retransmitted, the file or data may be corrupted, or any number of other problems may occur. Lost packets are especially problematic during voice communications resulting in call degradation. As a result, the shown power save mode may be inappropriate for voice communications that are characterized by periodic data traffic.

During the transition of the wireless device state 404 to the power off state 414, the data stream 402 is no longer communicated within the communication stream 406. The temporary transition of the wireless device state 404 to the power off state 414 associated with the sleep mode may increase the time for delivery of the packets to the communicating parties until the wireless device returns to the power on state 412. For example, a picture being transmitted in the data stream 402 may be further delayed because of the interruption caused within the communication stream 406 by the transition out of a full power mode to a sleep mode indicated by the wireless device state 404.

FIGs. 5, 6, and 7 further illustrate the power modes and communications that may be associated with the traffic profiles in various embodiments herein described. FIG. 7 shows the existing power save mode that may be utilized for the light traffic profile. A full sleep interval may pass between communications of packets. FIG. 6 shows the wireless device in a full power mode that may be utilized for the heavy traffic profile. The heavy traffic profile may indicate that using a sleep interval may cause additional delays, lost packets, and other communications problems. In the heavy traffic profile, the power on state is sustained and packets are regularly communicated between the wireless device and the wireless access point.

FIG. 5 illustrates an interval power save mode that may be utilized for the periodic traffic profile. In one embodiment, the wireless device may utilize a reduced period to come out of a sleep state to transmit or otherwise communicate with the wireless access point. As a result, instead of sleeping for an extended sleep interval, the wireless device may "wake up" more frequently to communicate and/or transmit packets. In one embodiment, the sleep intervals may be a factor or multiple of the typically beacon or sleep interval that may be utilized by the wireless access point. For example, the sleep interval may be 20 ms which may allow the wireless device to leave a sleep state to transmit packets up to five times before returning to the sleep state between the 100 ms sleep interval typically used by the wireless access point and wireless device. In another embodiment, the wireless device may transmit packets immediately once the packets are received or sampled by the wireless device to reduce latency and jitter. A small delay for preparation and processing may occur before the sampled packets may be communicated by the wireless device and/or wireless access point.

FIG. 5 is a voice stream utilizing an interval power save mode in accordance with an illustrative embodiment of the present invention. The data streams of FIG. 5 may include a voice stream 502, a wireless device state 504, and a communication stream 506. In one embodiment, the voice stream 502 may be the voice signal sampled by the wireless device. In another embodiment, the voice stream 502 may also represent voice packets from a connected device, such as a Bluetooth® headset. As before, the voice stream 502 has voice packets spaced approximately every 20 ms.

The illustrative embodiments may be utilized to more efficiently implement power conservation during a periodic traffic profile. The wake up period may be adjusted from a default level to a reduced wake up period in response to the wireless device selecting the periodic traffic profile. In one embodiment, the wireless device utilizes a reduced wake up period of 20 ms to transition out of sleep state in order to communicate pending or buffered packets from the voice stream 502. As a result, the wireless device may go in and out of a sleep state multiple times during a single sleep interval that may be utilized by the wireless access point.

As a result, the communication of packets within the voice stream 502 occurs without significant delay or congestion of packets. The communications streams in both FIG. 3 and 5 may be compared in order to view and understand the efficiency of transitioning out of power save mode at an increased frequency. In the illustrative embodiments, the wake up period is independently adjusted by the wireless device to a new wake up period, such as 20 ms, instead of a default setting, such as 100 ms.

The wireless device changes the wireless device state 504 to a full power (also referred to as a communication mode) more frequently to ensure that the packets of the voice stream are communicated in the communication stream 506 without significant delay thereby decreasing latency and the potential for jitter. The wireless device also returns more quickly to a sleep state to conserve battery power. The communication stream 506 maximizes the throughput of the voice stream 502 while similarly conserving battery life by remaining in a power save mode between the 20 ms wake up periods. FIG. 5 may be compared with FIG. 3 to see the reduced delay for communicating packets, such as 1 and 7, that may have an effect on latency and jitter. Packets 1 and 7 are delayed significantly when comparing the communication stream 306 of FIG. 3 with the communication stream 506 of FIG. 5.

In another embodiment, the wireless device may transition the wireless device state 504 from a sleep mode to a full power mode in response to sampling or receiving a packet for transmission to the wireless access point. As a result, the wireless device may automatically wake up to transmit one or more packets that have been sampled or buffered for transmission before returning to a sleep state. A small delay may occur between sampling or receiving the voice stream 502, transitioning the wireless device state 504, and communicating the voice packet in the communications stream 506.

FIG. 6 is a heavy data stream utilizing a full power mode in accordance with an illustrative embodiment of the present invention. The data streams of FIG. 6 may include a data stream 602, a wireless device state 604, and a communication stream 606. An illustrative embodiment may be utilized to more efficiently perform communications in response to a selection of a heavy traffic profile. The data stream 602 may represent an intense or large scale data stream. For example, a video message may be sent from a PDA to a receiving party's cell phone.

In one embodiment, the wireless device state 604 may illustrate that the full power state has been deactivated, disabled, or otherwise configured to remain in a full power mode so that the transmission stream may quickly communicate the data stream 602 without unnecessarily entering a power save mode. The illustrative embodiments may disable the wireless device state 404 (as shown in FIG. 4) or set it to full power when the average interval is less than 10 ms or in response to another specified threshold or level indicating the heavy traffic profile has been selected. FIG. 6 may be similarly compared with FIG. 4 to understand how the data stream 602 may be communicated within the communication stream 608 without delay because the wireless device state 604 does not unnecessarily transition like the wireless device state 404 of FIG. 4. In FIG. 6, the communication of the data stream 602 is not delayed which reduces the time required to complete large or intense communications.

FIG. 7 is a light data stream utilizing a sleep mode in accordance with an illustrative embodiment of the present invention. The data streams of FIG. 7 may include a data stream 702, a wireless device state 704, and a communication stream 706. An illustrative embodiment may be utilized to more efficiently perform communications in response to a selection of a light traffic profile. The data stream 702 may represent communication of intermittent packets.

In one embodiment, the wireless device state 704 may utilize a sleep mode in response to determining the average interval is greater than 60 ms or in response to another threshold. The sleep mode may utilize a wake up period or window, such as 100 ms, due to the sparseness of the packets within the data stream 702. The light traffic profile may implement the sleep mode because the packets are not being communicated at a sufficient frequency indicative of a voice communication or other application that is likely to be significantly affected by the communications delays of FIG. 7. As a result, the sleep mode implemented for the light traffic profile may conserve battery power while still providing an acceptable level of throughput.

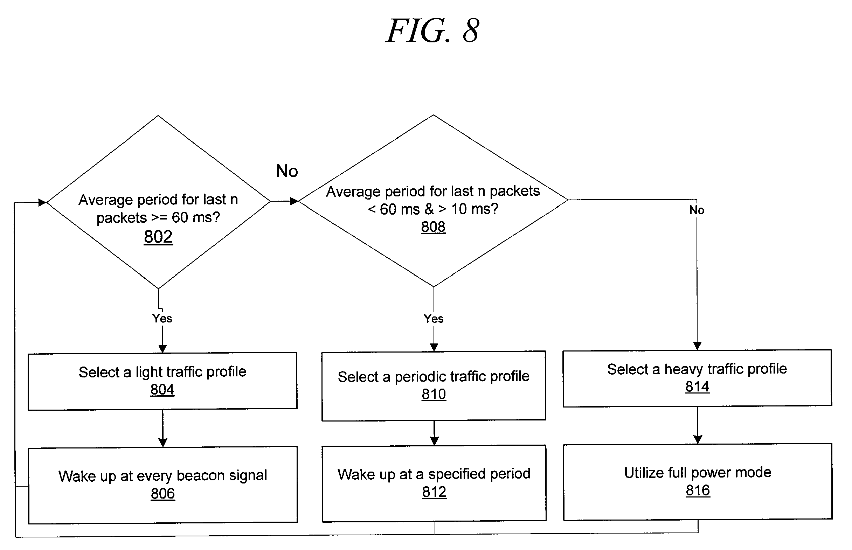

FIG. 8 is a flowchart of a process for utilizing a traffic profile to conserve power in accordance with an illustrative embodiment of the present invention. The process of FIG. 8 may be implemented by a wireless device or a wireless interface of a wireless device in accordance with an illustrative embodiment. The values, thresholds, and criteria provided in FIG. 8 are one embodiment of the information and data that may be utilized to determine a traffic profile and a power saving mode or action associated with each traffic profile. In one embodiment, the wireless device may utilize three power saving modes. In other embodiments, more power saving modes and traffic profiles may be utilized to further adjust the wake up period.

The process may begin by determining whether the average period for the last n packets is greater than 60 ms (step 802). The average period may be a real-time or running average of the number of packets completely or partially communicated within a specified time interval or based on a number of packets. The average period may similarly utilize any number of other evaluation, analysis, calculations, or statistical measurements or approximations. In one embodiment, the average period may be the lesser of the average number of packets transmitted during an interval of time or the average number of packets received during an interval of time. Alternatively, an transmission average or a receiving average may be utilized.

In response to determining the average period for the last n packets is greater than 60 ms, for example, and/or in response to other determinations, the wireless device may select a light traffic profile (step 804). The light traffic profile may be a setting, state, condition, or mode utilized by the wireless device. For example, the wireless device wakes up for communication at every beacon signal (step 806). During step 806, the wireless device may select a standard power saving mode associated with the light traffic profile during which packets are transmitted and received before entering a sleep state. In one embodiment, the wireless device may enter a full power mode during the standard power saving mode at a specified frequency, period, or time interval, such as every 100 ms. The 100 ms may correspond to a wake up period utilized during the power save mode. The wireless device may then determine whether the average period for the last n packets is greater than 60 ms (step 802).

If the wireless device determines the average interval for the last n packets is less than or equal to 60 ms, the wireless device may then determine whether the average period for the last n packets is less than or equal to 60 ms and greater than 10 ms (step 808). If the average period for the last n packets is between 60 ms and 10 ms, the wireless device may select a periodic traffic profile (step 810). In one embodiment, the periodic traffic profile may be configured for VoIP communications. For example, the periodic traffic profile may utilize a reduced wake up period preventing throughput and latency problems in order to maintain call quality.

Next, the wireless device wakes up at a specified period (step 812). In one embodiment, the wake up period or window is every 20 ms. The wireless device enters a full power state to transmit and receive packets every 20 ms before reentering a sleep state in order to reduce latency and increase throughput. The smaller wake up period may more closely correspond to the voice packets that are sampled or received by the wireless devices for enhancing voice communications. Next, the wireless device returns again to step 802.

If the average period for the last n packets is not between 60 ms and 10 ms in step 808, the wireless device may select a heavy traffic profile (step 814). The heavy traffic profile may indicate that a large file or other data intensive communication is occurring. Next, the wireless device utilizes a full power mode (step 816). While the heavy traffic profile is recognized or set, power saving functions and features may be at least temporarily suspended so that the wireless device may communicate in a full power state. In one embodiment, the transceiver may receive a command from a processor or logic of the wireless device to utilize the full power state or setting to communicate with the wireless access point until a subsequent command to utilize a distinct power mode is received. For example, a wake up period, sleep interval, feature, period, or window, utilized between communications may be disabled. The power saving functions may be suspended, disabled, or turned off so that communications are not stopped or otherwise interrupted during heavy communications in which all available bandwidth and processing power are required by the wireless device. Next, the wireless device returns again to step 802.

In one embodiment, the determinations of step 802 and 808 may be performed every 100 ms. For example, a counter may be utilized to measure the number of the packets communicated during the past 600 ms. At the end of the approximately 600 ms, the determinations of the average number of packets communicated during the time interval (600ms) may be performed. Steps 802 and 808 may be repeated to continuously determine the appropriate traffic profile based on the packets communicated by the wireless device. As a result, the wireless device may continuously determine the appropriate traffic profile and transition to the corresponding power save mode.

In another embodiment, the determination of the traffic profile may be performed based on other criteria to similarly adjust the tolerances for jitter and latency. In one embodiment, the traffic profile may be selected in response to a type of communication implemented by the wireless device or an application being executed by the wireless device. For example, if the wireless device is sending and receiving voice packets, the periodic traffic profile may be selected. In another example, the wireless device may select the heavy traffic profile in response to executing a peer-to-peer application.

The previous detailed description is of a small number of embodiments for implementing the invention and is not intended to be limiting in scope. For example, other traffic profiles may be added to the traffic profiles and power modes of the present invention. The following claims set forth a number of the embodiments of the invention disclosed with greater particularity.

**Claims**

1. A method for conserving power for wireless communications, the method comprising:

   determining (802, 808) packet communication information to and from a wireless device (102-108; 200);
   selecting (804, 810, 814) a traffic profile from a light traffic profile (210), and a heavy traffic profile (214) in response to the determined packet communication information; and
   communicating packets with a wireless access point (110) utilizing a power mode determined in response to the selected traffic profile, wherein the power mode is utilized by the wireless device (102-108; 200) independent of the wireless access point,
   **characterized in that**
   selecting (804, 810, 814) a traffic profile comprises selecting a periodic traffic profile (212) in response to the determined packet communication information, and
   a sleep interval used in the periodic traffic profile (212) is less than a beacon interval utilized by the wireless access point.

2. The method according to claim 1, wherein the packet communication information is an average period of packets communicated during an interval of time.

3. The method according to claim 2, wherein the average period of packets communicated during the interval of time is determined in response to a number of packets received by the wireless device (102-108; 200) within the time interval.

4. The method according to claim 1, wherein the traffic profile is determined for each wake up period.

5. The method according to claim 1, further comprising:

   utilizing a default wake up period for packet communication as the power mode in response to selecting the light traffic profile (210);
   utilizing a reduced wake up period for packet communication as the power mode in response to selecting the periodic traffic profile (212); and
   utilizing a full power mode without a wake up period in response to selecting the high traffic profile.

**6.** The method according to claim 5, wherein the periodic traffic profile (212) is utilized for voice communications.

**7.** The method according to claim 6, wherein the wireless device (102-108; 200) is configured to receive one packet during each wake up period.

**8.** The method according to claim 2, wherein the light traffic profile (210) is selected in response to the average period of packets communicated during an interval of time being greater than a high threshold, wherein the periodic traffic profile (212) is selected in response to the average period of packets communicated during an interval of time being equal to or less than the high threshold and greater than a low threshold, and wherein the heavy traffic profile (214) is selected in response to the average period of packets communicated during an interval of time being less than or equal to the low threshold.

**9.** The method according to claim 8, wherein the high threshold is 60 milliseconds, wherein the low threshold is 10 milliseconds, and wherein the reduced wake up period is 20 milliseconds.

**10.** A wireless device for conserving power, the wireless device (200) comprising:

a wireless interface (206) operable to determine packet communication information of the wireless device (200); and
power save logic (204) in communication with the wireless interface (206) operable to select a traffic profile from a light traffic profile (210), and a heavy traffic profile (214) in response to the determined packet communication information, wherein the wireless interface (206) communicates packets between the end-user wireless device and a wireless access (110) point utilizing a power mode associated with the traffic profile, **characterized in that**
the power save logic (204) is operable to select a periodic traffic profile (212) in response to the determined packet communication information, and a sleep interval used in the periodic traffic profile (212) is less than a beacon interval utilized by the wireless access point.

**11.** The wireless device according to claim 10, wherein the packet communication information is an average period of packets communicated during an interval of time.

**12.** The wireless device according to claim 11, wherein the average period of packets communicated during an interval of time is determined utilizing a number of packets received by the wireless interface (206) from the wireless access point within the interval of time.

**13.** The wireless device according to claim 10, wherein the light traffic profile (210) is selected in response to an average period of packets communicated during an interval of time being greater than a high threshold, wherein the periodic traffic profile (212) is selected in response to the average period of packets communicated during an interval of time being equal to or less than the high threshold and greater than a low threshold, and wherein the heavy traffic profile (214) is selected in response to the average period of packets communicated during an interval of time being less than or equal to the low threshold.

**14.** The wireless device according to claim 13, wherein the power save logic (204) utilizes a default wake up period for the light traffic profile (210), wherein the high threshold is 60 milliseconds and the low threshold is 10 milliseconds, and wherein the power save logic (204) utilizes a wake up period of 20 milliseconds for the periodic traffic profile (212).

**15.** The wireless device according to claim 12, wherein the wireless device adjusts a wake up period corresponding to the power mode without reconfiguring communications performed by the wireless access point.

**16.** A wireless device for conserving power, the wireless device (200) comprising:

a processor (202) operable to execute a set of instructions; and
a memory (208) in communication with the processor (202), the memory (208) operable to store a set of instructions, wherein the set of instructions are executed to carry out a method of one of claims 1 to 9.

**Patentansprüche**

**1.** Ein Verfahren zum Einsparen von Leistung für Drahtloskommunikationen, wobei das Verfahren folgende Schritte aufweist:

Ermitteln (802, 808) von Paketkommunikationsinformationen zu und von einem Drahtlosgerät (102-108; 200);
Auswählen (804, 810, 814) eines Datenverkehrsprofils aus einem Leichter-Datenverkehr-Profil (210) und einem Starker-Datenverkehr-Profil (214) ansprechend auf die ermittelten Paketkommunikationsinformationen; und
Kommunizieren von Paketen mit einem Drahtloszugangspunkt (110) unter Verwendung eines Leistungsmodus, der ansprechend auf das ausgewählte Datenverkehrsprofil ermittelt wird, wobei der Leistungsmodus durch das Drahtlosgerät (102-108; 200) unabhängig von dem Drahtloszugangspunkt verwendet wird, **dadurch gekennzeichnet, dass** Auswählen (804, 810, 814) eines Datenverkehrsprofils ein Auswählen eines Regelmäßiger-Datenverkehr-Profils (212) ansprechend auf die ermittelten Paketkommunikationsinformationen aufweist, und ein Schlafintervall, das bei dem Regelmäßiger-Datenverkehr-Profil (212) verwendet wird, kleiner als ein Funkfeuerintervall ist, das durch den Drahtloszugangspunkt verwendet wird.

2. Das Verfahren gemäß Anspruch 1, bei dem die Paketkommunikationsinformationen ein Durchschnittszeitraum von Paketen sind, die während eines Zeitintervalls kommuniziert werden.

3. Das Verfahren gemäß Anspruch 2, bei dem der Durchschnittszeitraum von Paketen, die während des Zeitintervalls kommuniziert werden, ansprechend auf eine Anzahl von Paketen ermittelt wird, die während des Zeitintervalls durch das Drahtlosgerät (102-108; 200) empfangen werden.

4. Das Verfahren gemäß Anspruch 1, bei dem das Datenverkehrsprofil für jeden Aufwachzeitraum ermittelt wird.

5. Das Verfahren gemäß Anspruch 1, das ferner folgende Merkmale aufweist:

Verwenden eines vorgegebenen Aufwachzeitraums für eine Paketkommunikation als Leistungsmodus ansprechend auf ein Auswählen des Leichter-Datenverkehr-Profils (210); Verwenden eines reduzierten Aufwachzeitraums für eine Paketkommunikation als Leistungsmodus ansprechend auf ein Auswählen des Regelmäßiger-Datenverkehr-Profils (212); und Verwenden eines Volle-Leistung-Modus ohne einen Aufwachzeitraum ansprechend auf ein Auswählen des Starker-Datenverkehr-Profils.

6. Das Verfahren gemäß Anspruch 5, bei dem das Regelmäßiger-Datenverkehr-Profil (212) für Sprachkommunikationen verwendet wird.

7. Das Verfahren gemäß Anspruch 6, bei dem das Drahtlosgerät (102-108; 200) dazu ausgebildet ist, während jedes Aufwachzeitraums ein Paket zu empfangen.

8. Das Verfahren gemäß Anspruch 2, bei dem das Leichter-Datenverkehr-Profil (210) ansprechend darauf ausgewählt wird, dass der Durchschnittszeitraum von Paketen, die während eines Zeitintervalls kommuniziert werden, größer als ein hoher Schwellenwert ist, bei dem das Regelmäßiger-Datenverkehr-Profil (212) ansprechend darauf ausgewählt wird, dass der Durchschnittszeitraum von Paketen, die während eines Zeitintervalls kommuniziert werden, gleich groß wie oder kleiner als der hohe Schwellenwert und größer als ein niedriger Schwellenwert ist, und bei dem das Starker-Datenverkehr-Profil (214) ansprechend darauf ausgewählt wird, dass der Durchschnittszeitraum von Paketen, die während eines Zeitintervalls kommuniziert werden, kleiner als oder gleich groß wie der niedrige Schwellenwert ist.

9. Das Verfahren gemäß Anspruch 8, bei dem der hohe Schwellenwert 60 Millisekunden ist, bei dem der niedrige Schwellenwert 10 Millisekunden ist und bei dem der reduzierte Aufwachzeitraum 20 Millisekunden ist.

10. Ein Drahtlosgerät zum Einsparen von Leistung, wobei das Drahtlosgerät (200) folgende Merkmale aufweist:

eine Drahtlosschnittstelle (206), die wirksam ist, Paketkommunikationsinformationen des Drahtlosgeräts (200) zu ermitteln; und eine Leistungssparlogikeinrichtung (204) in Kommunikation mit der Drahtlosschnittstelle (206), die wirksam ist, ein Datenverkehrsprofil ansprechend auf ermittelte Paketkommunikationsinformationen aus einem Leichter-Datenverkehr-Profil (210) und einem Starker-Datenverkehr-Profil (214) auszuwählen, wobei die Drahtlosschnittstelle (206) Pakete zwischen dem Endnutzerdrahtlosgerät und einem Drahtloszugangspunkt (110) unter Verwendung eines Leistungsmodus kommuniziert, der dem Datenverkehrsprofil zugeordnet ist, **dadurch gekennzeichnet, dass** die Leistungssparlogikeinrichtung (204) wirksam ist, ansprechend auf die ermittelten Paketkommunikationsinformationen ein Regelmäßiger-Datenverkehr-Profil (212) auszuwählen, und ein Schlafintervall, das in dem Regelmäßiger-Datenverkehr-Profil (212) verwendet wird, kleiner als ein Funkfeuerintervall ist, das durch den Drahtloszugangspunkt verwendet wird.

11. Das Drahtlosgerät gemäß Anspruch 10, bei dem die Paketkommunikationsinformationen ein Durchschnittszeitraum von Paketen sind, die während eines Zeitintervalls kommuniziert werden.

12. Das Drahtlosgerät gemäß Anspruch 11, bei dem der Durchschnittszeitraum von Paketen, die während eines Zeitintervalls kommuniziert werden, unter Verwendung einer Anzahl von Paketen ermittelt wird, die innerhalb des Zeitintervalls ausgehend von dem Drahtloszugangspunkt durch die Drahtlosschnittstelle (206) empfangen werden.

13. Das Drahtlosgerät gemäß Anspruch 10, bei dem das Leichter-Datenverkehr-Profil (210) ansprechend darauf ausgewählt wird, dass ein Durchschnittszeitraum von Paketen, die während eines Zeitintervalls kommuniziert werden, größer als ein hoher Schwellenwert ist, bei dem das Regelmäßiger-Datenverkehr-Profil (212) ansprechend darauf ausgewählt wird, dass der Durchschnittszeitraum von Paketen, die während eines Zeitintervalls kommuniziert werden, gleich groß wie oder kleiner als der hohe Schwellenwert und größer als ein niedriger Schwellenwert ist, und bei dem das Starker-Datenverkehr-Profil (214) ansprechend darauf ausgewählt wird, dass der Durchschnittszeitraum von Paketen, die während eines Zeitintervalls kommuniziert werden, kleiner als oder gleich groß wie der niedrige Schwellenwert ist.

14. Das Drahtlosgerät gemäß Anspruch 13, bei dem die Leistungssparlogikeinrichtung (204) einen vorgegebenen Aufwachzeitraum für das Leichter-Datenverkehr-Profil (210) verwendet, wobei der hohe Schwellenwert 60 Millisekunden ist und der niedrige Schwellenwert 10 Millisekunden ist, und bei dem die Leistungssparlogikeinrichtung (204) einen Aufwachzeitraum von 20 Millisekunden für das Regelmäßiger-Datenverkehr-Profil (212) verwendet.

15. Das Drahtlosgerät gemäß Anspruch 12, wobei das Drahtlosgerät einen Aufwachzeitraum einstellt, der dem Leistungsmodus entspricht, ohne durch den Drahtloszugangspunkt durchgeführte Kommunikationen neu zu konfigurieren.

16. Ein Drahtlosgerät zum Einsparen von Leistung, wobei das Drahtlosgerät (200) folgende Merkmale aufweist:

eine Verarbeitungseinrichtung (202), die wirksam ist, einen Satz von Anweisungen auszuführen; und
eine Speichereinrichtung (208) in Kommunikation mit der Verarbeitungseinrichtung (202), wobei die Speichereinrichtung (208) wirksam ist, einen Satz von Anweisungen zu speichern, wobei der Satz von Anweisungen ausgeführt wird, um ein Verfahren gemäß einem der Ansprüche 1 bis 9 durchzuführen.

## Revendications

1. Procédé de conservation de puissance pour des communications sans fil, ce procédé comprenant :

la détermination (802, 808) d'informations de communication par paquets vers et d'un dispositif sans fil (102-108 ; 200) ;
la sélection (804, 810, 814) d'un profil de trafic à partir d'un profil de trafic léger (210) et d'un profil de trafic lourd (214) en réponse aux informations de communication par paquets déterminées ; et
communication par paquets avec un point d'accès sans fil (110) utilisant un mode de puissance déterminé en réponse au profil de trafic sélectionné, le mode de puissance étant utilisé par le dispositif sans fil (102-108 ; 200) indépendamment du point d'accès sans fil d'un profil de trafic sans fil,

**caractérisé en ce que**

la sélection (804, 810, 814) d'un profil de trafic comprend la sélection d'un profil de trafic périodique (212) en réponse aux informations de communication par paquets déterminées, et un intervalle de sommeil utilisé dans le profil de trafic périodique (212) est inférieur à un intervalle de balise utilisé par le point d'accès sans fil.

2. Procédé selon la revendication 1, dans lequel les informations de communication par paquets constituent une période moyenne de paquets communiqués pendant un intervalle de temps.

3. Procédé selon la revendication 2, dans lequel la période moyenne des paquets communiqués pendant l'intervalle de temps est déterminée en réponse à un nombre de paquets reçus par le dispositif sans fil (102-108 ; 200) pendant l'intervalle de temps.

4. Procédé selon la revendication 1, dans lequel le profil de trafic est déterminé pour chaque période de réveil.

5. Procédé selon la revendication 1, comprenant en outre :

l'utilisation d'une période de réveil par défaut pour une communication par paquets en tant que mode de puissance en réponse à la sélection du profil de trafic léger (210) ;
l'utilisation d'une période de réveil réduite pour une communication par paquets en tant que mode de puissance en réponse à la sélection du profil de trafic périodique (212) ; et
l'utilisation d'un mode de pleine puissance sans une période de réveil en réponse à la sélection du profil de trafic élevé.

6. Procédé selon la revendication 5, dans lequel le profil de trafic périodique (212) est utilisé pour des communications vocales.

7. Procédé selon la revendication 6, dans lequel le dispositif sans fil (102-108 ; 200) est conçu pour recevoir un paquet pendant chaque période réveil.

8. Procédé selon la revendication 2, dans lequel le profil de trafic léger (210) est sélectionné en réponse à la période moyenne des paquets communiqués pendant un intervalle de temps supérieur à un seuil supérieur, le profil de trafic périodique (212) est sélectionné en réponse à la période moyenne des paquets communiqués pendant un intervalle de temps égal ou inférieur au seuil supérieur et supérieur à un seuil inférieur, et le profil de trafic lourd (214) étant sélectionné en réponse à la période moyenne des paquets communiqués pendant un intervalle de temps inférieur ou égal au seuil inférieur.

9. Procédé selon la revendication 8, dans lequel le seuil supérieur est de 60 millisecondes, le seuil inférieur étant de 10 millisecondes et la période de réveil étant de 20 millisecondes.

10. Dispositif sans fil pour la conservation de puissance, le dispositif sans fil (200) comprenant :

   une interface sans fil (206) conçue pour déterminer les informations de communication par paquets du dispositif sans fil (200) ; et
   un circuit logique d'économie d'énergie (204) en communication avec l'interface sans fil (206), conçu pour sélectionner un profil de trafic parmi un profil de trafic léger (210) et un profil de trafic lourd (214) en réponse aux informations de communication par paquets déterminées,
   l'interface sans fil (206) communiquant des paquets entre le dispositif sans fil de l'utilisateur final et un point d'accès sans fil (110) utilisant un mode de puissance associé au profil de trafic,

   **caractérisé en ce que**

   le circuit logique d'économie d'énergie (204) est conçu pour sélectionner un profil de trafic périodique (212) en réponse aux informations de communication par paquets déterminées,
   un intervalle de sommeil utilisé dans le profil de trafic périodique (212) est inférieur à un intervalle de balise utilisé par le point d'accès sans fil.

11. Dispositif sans fil selon la revendication 10, dans lequel les informations de communication par paquets constituent une période moyenne de paquets communiqués pendant un intervalle de temps.

12. Dispositif sans fil selon la revendication 11, dans lequel la période moyenne des paquets communiqués pendant un intervalle de temps est déterminée à l'aide d'un nombre de paquets reçus par l'interface sans fil (206) en provenance du point d'accès sans fil pendant l'intervalle de temps.

13. Dispositif sans fil selon la revendication 10, dans lequel le profil de trafic léger (210) est sélectionné en réponse à une période moyenne des paquets communiqués pendant un intervalle de temps supérieur à un seuil supérieur, le profil de trafic périodique (212) étant sélectionné en réponse à la période moyenne des paquets communiqués pendant un intervalle de temps égal ou inférieur au seuil supérieur et supérieur à un seuil inférieur et le profil de trafic lourd (214) étant sélectionné en réponse à la période moyenne des paquets communiqués pendant un intervalle de temps inférieur ou égal au seuil inférieur.

14. Dispositif sans fil selon la revendication 13, dans lequel le circuit logique d'économie d'énergie (204) utilise une période de réveil par défaut pour le profil de trafic léger (210), le seuil supérieur étant de 60 millisecondes et le seuil inférieur étant de 10 millisecondes et le circuit logique d'économie d'énergie (204) utilisant une période de réveil de 20 millisecondes pour le profil de trafic périodique (212).

15. Dispositif sans fil selon la revendication 12, dans lequel le dispositif sans fil ajuste une période de réveil correspondant au mode de puissance sans reconfigurer les communications effectuées par le point d'accès sans fil.

16. Dispositif sans fil pour conservation de puissance, le dispositif sans fil (200) comprenant :

   un processeur (202) conçu pour exécuter un jeu d'instructions ; et
   une mémoire (208) en communication avec le processeur (202), la mémoire (208) étant conçue pour stocker un jeu d'instructions, le jeu d'instructions étant exécuté pour réaliser un procédé selon l'une des revendications 1 à 9.

FIG. 1

100

Communications
network
114

112

110

102

104

106

108

EP 2 235 707 B1

*FIG. 2*

Wireless router
216

Wireless Device
200

Processor
202

Power Save Logic
204

Wireless Interface
206

Memory
208

Light Traffic Profile
210

Periodic Traffic Profile
212

Heavy Traffic Profile
214

## FIG. 3
### (Prior Art)

302

#0 #1 #2 #3 #4 #5 #6 #7 #8 #9 #10 #11 #12 #13 #14 #15 #16

304

| Power on state | Power on state | Power on state | Power on state |

306

#### #0 #1    #2 #3 #4 #5 #6    #7 #8 #9 #10 #11    #12 #13 #14 #15 #16

Time 0ms          100ms          200ms          300ms

## FIG. 4
### (Prior Art)

Lost Packets
408

402

#1 #2 #3 #4 #5 #6 #7 #8 #9 #10 #11 #12 #13 #14 #15 #16 #17 #18 #19 #20

404

| Power on state 410 | Power off state 414 | Power on state 412 |

418

406

416

#14 #16 #18 #20
#13 #15 #17 #19

0ms          100ms          200ms          300ms

FIG. 5

FIG. 6

FIG. 7

## FIG. 8

```
                              No
┌─────────────────────┐         ┌─────────────────────┐
│ Average period for   │────────▶│ Average period for   │──────────▶ No
│ last n packets       │         │ last n packets       │
│ >= 60 ms?            │         │ < 60 ms & > 10 ms?   │
│ 802                  │         │ 808                  │
└─────────────────────┘         └─────────────────────┘
        │ Yes                            │ Yes                        │
        ▼                                ▼                            ▼
┌─────────────────────┐   ┌─────────────────────┐   ┌─────────────────────┐
│ Select a light      │   │ Select a periodic   │   │ Select a heavy      │
│ traffic profile     │   │ traffic profile     │   │ traffic profile     │
│ 804                 │   │ 810                 │   │ 814                 │
└─────────────────────┘   └─────────────────────┘   └─────────────────────┘
        │                          │                          │
        ▼                          ▼                          ▼
┌─────────────────────┐   ┌─────────────────────┐   ┌─────────────────────┐
│ Wake up at every    │   │ Wake up at a        │   │ Utilize full power  │
│ beacon signal       │   │ specified period    │   │ mode                │
│ 806                 │   │ 812                 │   │ 816                 │
└─────────────────────┘   └─────────────────────┘   └─────────────────────┘
```

EP 2 235 707 B1

**EP 2 235 707 B1**

**Patent documents cited in the description**

- WO 2005002137 A1
- EP 1613107 A2
- US 2008261663 A1
- US 2007259673 A1